(19) Europäisches Patentamt / European Patent Office / Office européen des brevets

(11) **EP 3 060 797 B1**

(12) **EUROPÄISCHE PATENTSCHRIFT**

(45) Veröffentlichungstag und Bekanntmachung des Hinweises auf die Patenterteilung:
**30.10.2019 Patentblatt 2019/44**

(21) Anmeldenummer: **14776996.2**

(22) Anmeldetag: **02.09.2014**

(51) Int Cl.:
*F03D 15/00* (2016.01)   *F16H 3/72* (2006.01)
*F03D 5/06* (2006.01)

(86) Internationale Anmeldenummer:
**PCT/EP2014/002379**

(87) Internationale Veröffentlichungsnummer:
**WO 2015/032491 (12.03.2015 Gazette 2015/10)**

(54) **TRIEBSTRANG UND VERFAHREN FÜR ANTRIEBE MIT WEIT ENTFERNTEN BETRIEBSPUNKTEN**

DRIVE TRAIN AND METHOD FOR DRIVES HAVING WIDELY SPACED OPERATING POINTS

CHAÎNE CINÉMATIQUE POUR MÉCANISMES D'ENTRAÎNEMENT À POINTS DE FONCTIONNEMENT TRÈS ÉLOIGNÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.09.2013 EP 13004353**

(43) Veröffentlichungstag der Anmeldung:
**31.08.2016 Patentblatt 2016/35**

(73) Patentinhaber: **EnerKite GmbH**
**14532 Kleinmachnow (DE)**

(72) Erfinder:
• **KÖVESDI, Peter**
  **13355 Berlin (DE)**
• **DREIER, Jan-Eike**
  **32584 Löhne (DE)**

(74) Vertreter: **Benz, Jürgen**
**Heumann**
**Rechts- und Patentanwälte**
**Spessartring 63**
**64287 Darmstadt (DE)**

(56) Entgegenhaltungen:
**EP-A2- 0 710 787      WO-A1-2011/000008**
**DE-A1- 19 818 108      JP-A- 2009 120 105**
**US-A- 5 433 282      US-A1- 2002 117 339**

## Beschreibung

Die Erfindung betrifft eine mit mindestens einem Triebstrang / Antrieb versehene Vorrichtung mit mindestens zwei voneinander entfernten Betriebspunkten zur Erreichung einer hohen Drehzahlspreizung bei hohem Wirkungsgrad in einem Triebstrang. Die Erfindung betrifft ferner ein Verfahren zur Regelung der Lastdrehzahl einer entsprechenden Vorrichtung, insbesondere einer Windkraftenergieanlage.

Die Erfindung betrifft alle Antriebssituationen, deren Lastfälle sich folgendermaßen auszeichnen:

(i) Es gibt zwei Betriebspunkte oder -bereiche, deren Drehzahl betragsmäßig um einen Faktor deutlich über 1, insbesondere über 10 auseinander liegt.
(ii) Der Leistungsbedarf ist in beiden Betriebspunkten/-bereichen etwa gleich hoch.
(iii) Es soll in beiden Betriebspunkten/-bereichen ein hoher Wirkungsgrad in den Antrieben erreicht werden.
(iv) Der Übergang zwischen den Betriebspunkten oder -bereichen soll ohne Unterbrechung der Steuerbarkeit, des Drehmoments oder der Drehung geschehen, abgesehen von einem etwaigen Umkehrpunkt des Abtriebsdrehsinns.

Eine typische Anwendung sind Windenergieanlagen, welche mit einem oder mehreren Flugkörpern über ein oder mehrere Zugseile (6) mit einer Bodenstation mechanische Energie mittels des YoYo-Prinzips in elektrische Energie wandeln. Bekannt sind solche Anlagen z.B. aus DE2006001806, CA2730939, DE3209368, DE4319823, DE19629417 und DE102008047261. Dieser Zyklus besteht mindestens aus den Phasen A - Ausfahren und E - Einholen. Beim Ausfahren arbeitet die Bodenstation im Generatorbetrieb und gibt das Zugseil mit langsamer Geschwindigkeit und hoher Kraft frei. Beim Rückholen arbeitet die Bodenstation im Motorbetrieb und holt das Zugseil mit hoher Geschwindigkeit und geringer Kraft wieder zurück. Die Gesamteffizienz der Anlage hängt stark vom Geschwindigkeitsverhältnis zwischen Einholphase E und Ausfahrphase A ab. Das optimale Geschwindigkeitsverhältnis ist vom Unterschied der aerodynamischen Eigenschaften (z.B. Gleitzahl) und der Flugbahn des Fluggerätes zwischen den Betriebsphasen E und A abhängig und liegt bei hochentwickelten Fluggeräten betragsmäßig bei 10:1 oder mehr.

Der Erfindung liegt das Problem zugrunde, einen Triebstrang zu schaffen, der in zwei Betriebspunkten oder -bereichen mit großem Drehzahlabstand zueinander einen hohen Wirkungsgrad hat. Außerdem muss die Laststeuerbarkeit in Drehzahl und/oder Moment über den gesamten Bereich zwischen den Betriebspunkten/-bereichen gewährleistet sein. Die zu installierende gesamte Nennleistung aller Antriebe soll dabei möglichst gering sein. Aufgrund von hohen Sicherheitsanforderungen ist auch eine Laststeuerbarkeit bei Ausfall eines Antriebes von Vorteil.

Bekannt sind Lösungen mit einem Antrieb, welcher so weit überdimensioniert ist, dass er in beiden Betriebspunkten/-bereichen die geforderte Leistung liefern kann. Dazu arbeitet er möglicherweise in wenigstens einem der Betriebspunkte im Feldschwächebereich. Diese Lösung hat den Nachteil eines schlechten Wirkungsgrades in mindestens einem der Betriebspunkte, sowie einer trotz möglicherweise großem Feldschwächebereich immer noch notwendigen Überdimensionierung der Antriebsmaschine, um die große Drehzahlspreizung bei hinreichender Leistungsabgabe in beiden Betriebspunkten zu gewährleisten. Darüber hinaus ist beim Ausfall dieses Antriebs die Laststeuerfähigkeit verloren. Eine Erhöhung der Ausfallsicherheit ist hier nur mit hohen Mehrkosten zu realisieren.

Eine andere bekannte Lösung ist die Verwendung eines Schaltgetriebes (z.B. Kupplungsgetriebe). Um im Schaltzeitpunkt eine Schalten ohne Unterbrechung des Drehmoments zu erreichen muss ein Lastschaltgetriebe, bspw. eine Doppelkupplungsgetriebe eingesetzt werden. Schaltgetriebe ziehen höhere Kosten und eine prinzipiell bedingte höhere Ausfallwahrscheinlichkeit nach sich. Die Laststeuerbarkeit beim Ausfall dieses Antriebs ist auch hier verloren.

Eine weitere Lösung ist die Verwendung je eines Antriebes für das Ausfahren und für das Rückholen. Hierbei ist die zu installierende Antriebsleistung groß, da in jeder der Betriebsphasen jeweils nur 1 Antrieb arbeitet. Die Übergabe des Drehmoments von einer Maschine auf die andere muss mit geeigneten Kupplungen geschehen.

Weiterhin bekannt sind Triebstränge, die auf der Zusammenschaltung zweier Antriebsmaschinen über ein Umlaufgetriebe beruhen. Diese sind bspw. in Parallelhybridantrieben üblich. Sie dienen der Leistungssummierung zweier, i.d.R. unterschiedlicher Antriebsmaschinen, bspw. eines Verbrennungs- und eines Elektromotors. Hierfür werden die Antriebe an die Differenzwellen des Umlaufgetriebes gekoppelt. So summieren sich deren Momente und Leistungen auf die Summenwelle, welche den Abtrieb bildet. Hierbei ist der drehzahlmäßige Betriebsbereich auf den Betriebsbereich der Antriebsmaschinen beschränkt, da bei gleichsinniger Drehzahl der beiden Antriebe der Abtrieb ebenfalls mit entsprechend übersetzter Nenndrehzahl dreht und bei gegensinniger Nenndrehzahl der Antriebe der Abtrieb nur noch mit entsprechend übersetzter Differenz zwischen den Antriebsdrehzahlen dreht. Eine Drehrichtungsumkehr eines der beiden Antriebe bringt eine Drehzahlveränderung am Abtrieb um einen nur geringen Faktor, i.d.R. nahe 1.

Stand der Technik ist ebenso das so genannte "Hybrid Synergy Drive" der Firma Toyota. Hier werden je ein Antrieb an jede Welle eines Planetengetriebes gekoppelt. In dieser Anordnung werden aufgrund der Leistungsbilanz am Planetengetriebe jedoch stets ein Teil der Leistung von mindestens einem der 3 Antriebe in mindestens einen anderen eingespeist, was mit Verlusten behaftet ist. Es ist auch nicht vorgesehen, die Abtriebsdrehzahl durch gegenläufiges Drehen zweier Antriebe stark zu erhöhen, da es hier nicht gewünscht ist, eine hohe Drehzahl bei geringem

**EP 3 060 797 B1**

Moment zu erreichen. Das Drehmoment soll gerade bei hohen Geschwindigkeiten nicht nachlassen. Des Weiteren ist der Antrieb am Steg des Planetengetriebes ein Verbrennungsmotor, der die Drehrichtung nicht ändern kann.

Die Aufgabe wird erfindungsgemäß dadurch gelöst, dass der Triebstrang mindestens zwei Antriebe oder Kraftmaschinen (A1, A2) besitzt, deren Antriebsleistungen mittels eines Umlaufgetriebes (3) summiert und an die Last bzw. eine Arbeitsmaschine (L) übertragen werden.

Die gattungsgemäße JP2009120105 offenbart eine Vorrichtung zur Erreichung einer hohen Drehzahlspreizung bei hohem Wirkungsgrad in einem Triebstrang einer angetriebenen Maschine oder Anlage, umfassend zwei Kraftmaschinen, welche mittelbar über geeignete Kopplungselemente, Übertragungsglieder und/oder Übersetzungseinrichtungen oder unmittelbar mit der Stegwelle und der langsameren von zwei Standgetriebewellen eines Umlaufgetriebes drehfest miteinander verbunden sind wobei die inneren Bewegungen des Umlaufgetriebes durch eine oder mehrere Kupplungsvorrichtung/-en in einer Drehrichtung gesperrt und in der anderen Drehrichtung zugelassen sind. JP2009120105 offenbart auch ein Verfahren zur Regelung der Lastdrehmomente. JP2009120105 offenbart auch eine Anlage umfassend : Kraftmaschinen, welche mittelbar über geeignete Kopplungselemente, Übertragungsglieder und/oder Übersetzungseinrichtungen oder unmittelbar mit der Stegwelle und der langsameren von zwei Standgetriebewellen eines Umlaufgetriebes drehfest miteinander verbunden sind, wobei eine Kraftmaschine an die Stegwelle und die andere Kraftmaschine an die betragsmäßig langsamer laufende der Standgetriebewellen gekoppelt ist und die inneren Bewegungen des Umlaufgetriebes durch eine oder mehrere Kupplungsvorrichtung/-en in einer Drehrichtung gesperrt und in der anderen Drehrichtung zugelassen sind, wobei die Kupplungsvorrichtung durch eine Freilaufkupplung gebildet wird.

Zusammenfassung der Erfindung:

Gegenstand der Erfindung ist somit eine Vorrichtung zur Erreichung einer hohen Drehzahlspreizung bei hohem Wirkungsgrad in einem Triebstrang einer angetriebenen Maschine oder Anlage, umfassend

(i) zwei mittels Motor oder Generator arbeitende Kraftmaschinen (A1, A2), welche mittelbar über geeignete Kopplungselemente, Übertragungsglieder und/oder Übersetzungseinrichtungen (7, 8) oder unmittelbar mit der Stegwelle (S) und der langsameren von zwei Standgetriebewellen (2) eines Umlaufgetriebes (3) drehfest miteinander verbunden sind, sowie

(ii) eine Arbeitsmaschine (L), welche mittelbar über geeignete Kopplungselemente, Übertragungsglieder und/oder Übersetzungseinrichtungen oder unmittelbar mit der schnelleren von zwei Standgetriebewellen (1) des Umlaufgetriebes (3) drehfest miteinander verbunden sind,

wobei die inneren Bewegungen des Umlaufgetriebes (3) durch eine oder mehrere geeignete Kupplungsvorrichtung/-en (6) in einer Drehrichtung gesperrt und in der anderen Drehrichtung zugelassen werden.

Es ist klarzustellen, dass erfindungsgemäß die Begriffe "Antrieb" und "Antriebsmaschine" synonym mit dem Begriff "Kraftmaschine" (A1, A2) verwendet werden. Ebenso wird der Begriff "Last" oder "Lastmaschine" synonym mit dem Begriff "Arbeitsmaschine" (L) verwendet.

Erfindungsgemäß kann jede der beiden Kraft- oder Antriebsmaschinen (A1, A2) funktionell mit weiteren, insbesondere ein, zwei, drei oder vier Antriebsmaschinen funktionell in Verbindung stehen. Ebenso kann die Arbeitsmaschine (L) funktionell mit weiteren, insbesondere eins, zwei drei oder vier Arbeitsmaschinen verbunden bzw. gekoppelt sein.

Erfindungsgemäß kann jede der beiden Kraftmaschinen sowie ggf. die mit ihnen verbundenen weiteren Antrieben Vor- und/oder Übersetzungseinrichtungen aufweisen.

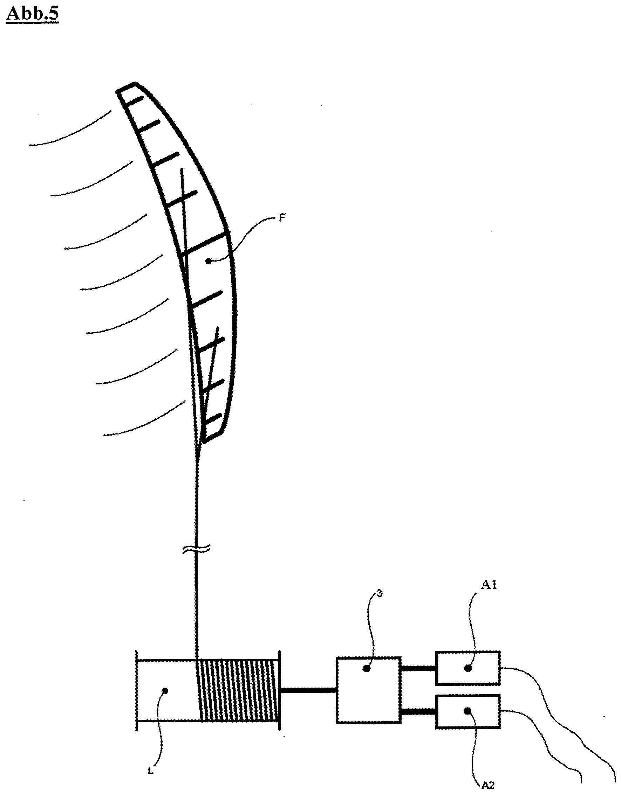

Mit Antrieb sind im Folgenden je eine oder mehrere zusammengeschlossene Kraftmaschinen, mit Last eine oder mehrere verteilte Arbeitsmaschinen, jeweils inklusive etwaiger Übersetzungs- und Leistungssummierungs-/-Verteilungseinrichtungen gemeint. Zum besseren Verständnis werden im Folgenden die Begriffe Antrieb und Last, bzw. Kraft- und Arbeitsmaschine unabhängig von der Richtung des Leistungsflusses beibehalten. Dies ist jedoch ausdrücklich nicht einschränkend für die Erfindung gemeint. Leistung kann sowohl von einem oder beiden Antrieben in das Umlaufgetriebe und vom Umlaufgetriebe zur Last, als auch jeweils umgekehrt fließen. Es ist also ausdrücklich auch ein generatorischer oder gemischter Betrieb vorgesehen und erfindungsgemäß möglich. Mit anderen Worten, die Kraftmaschinen (A1, A2) können temporär während eines Gesamt-Arbeitsprozesses als Arbeitsmaschinen, und die Arbeitsmaschine (L) als Kraftmaschine betrieben werden. Dies kann z.B. bei einer Flugwindkraftanlage gemäß Abb. 5 praktiziert werden.

Mit den Begriffen Moment, Drehzahl und Leistung eines Antriebs oder der Last seien stets diese Größen am jeweiligen Kopplungspunkt zum Umlaufgetriebe (3) gemeint. Momente bezeichnen im Folgenden stets Drehmomente *auf* die Welle des Umlaufgetriebes.

Gegenstand der Erfindung ist insbesondere eine entsprechende Vorrichtung bei der die Kupplungsvorrichtung, wie folgt gestaltet sein kann:

(i) sie wird durch eine Freilaufkupplung gebildet,

(ii) mindestens eine, insbesondere eine, zwei, drei oder vier Kupplungsvorrichtung(en) ist /sind zwischen die beiden Standgetriebewellen (1, 2) des Umlaufgetriebes geschaltet bzw. angebracht.

(iii) mindestens eine, insbesondere eine, zwei, drei oder vier Kupplungsvorrichtung(en) ist /sind zwischen die Stegwelle (S) und die langsamere Standgetriebewelle (2) des Umlaufgetriebes geschaltet bzw. angebracht.

(iv) mindestens eine, insbesondere eine, zwei, drei oder vier Kupplungsvorrichtung(en) ist /sind zwischen die Stegwelle (S) und die schnellere Standgetriebewelle (1) des Umlaufgetriebes geschaltet bzw. angebracht.

(v) mindestens eine, insbesondere eine, zwei, drei oder vier Kupplungsvorrichtung(en) ist /sind zwischen die Stegwelle (S) und eines oder mehrere Planetenräder (P) des Umlaufgetriebes geschaltet bzw. angebracht.

In einer weiteren Ausführungsform der Erfindung ist die Kupplungsvorrichtung (6) drehelastisch mit einem oder mehreren der beteiligten Glieder verbunden.

In einer anderen Ausführungsform der Erfindung ist das Umlaufgetriebe, welches einstufig oder mehrstufig sein kann, ein Planetengetriebe, bzw. ein einstufiges oder mehrstufiges Planetengetriebe.

Gegenstand der Erfindung ist eine entsprechende Vorrichtung bei der die Drehzahlen der wirkungsgradmäßigen Bestpunkte der installierten Kraftmaschinen (A1, A2) (inklusive Vor-Übersetzungseinrichtungen) im Wesentlich gleich sind oder maximal 10%, insbesondere 1%, 2%, 3%, 4%, 5%, 6%, 7%, 8% und 9% voneinander abweichen.

Gegenstand der Erfindung ist auch eine Vorrichtung, bei der sich die Drehmomente der wirkungsgradmäßigen Bestpunkte der installierten Kraftmaschinen zueinander betragsmäßig im Wesentlichen wie der Betrag des um 1 verminderten Reziproken des Produktes aus Standübersetzung und Standwirkungsgrad in Leistungsflussrichtung des verwendeten Umlaufgetriebes verhalten, oder maximal nicht mehr als 10%, vorzugsweise zwischen 0 und 5% von diesem Verhältnis abweichen.

Gegenstand der Erfindung ist auch eine Vorrichtung, bei der die Drehmoment-Drehzahl-Kennlinien der installierten Kraftmaschinen im Wesentlichen gleich sind, oder bei keiner Drehzahl um mehr als 10%, vorzugsweise zwischen 0 - 5% im Nenn-Momentwert voneinander abweichen

Ferner ist Gegenstand der Erfindung ein Verfahren zur Regelung des Lastdrehmomentes einer Vorrichtung wie oben und folgend beschrieben im Betrieb mit gesperrter Kupplungsvorrichtung, wobei die Drehzahlen von beiden Kraftmaschinen (A1, A2) geregelt werden, wobei in einer Ausführungsform der Erfindung, die eine Kraftmaschine (A1 oder A2) als Master-Device betrieben wird, und die andere (A2 oder A1) als Slave-Device. Dabei kann das Solldrehmoment des Drehmomentregelkreises der als Slave-Device betriebenen Kraftmaschine zum Solldrehmoment des ggf. in einen Drehzahlregelkreis eingebetteten Drehmomentregelkreises der als Master-Device betriebenen Kraftmaschine in ein festes Verhältnis gesetzt werden, wobei in einer weiteren Ausführungsform das Verhältnis der Solldrehmomente dem der Momentenfähigkeit oder des Nennmoments der Kraftmaschinen entspricht. Dabei können die Kraftmaschinen (A1, A2) die momentengeregelt werden, zusätzlich eine Regelung der Maximaldrehzahl aufweisen. Dabei kann die Maximaldrehzahl der als Slave-Device betriebenen Kraftmaschine in der Weise höher als die Maximaldrehzahl der anderen, als Master-Device betriebenen Kraftmaschine eingestellt werden, dass die als Slave-Device betriebene Kraftmaschine ihre Maximaldrehzahl nur im Falle eines Fehlers im System erreicht wird.

Gegenstand der Erfindung ist weiter ein Verfahren zur Regelung des Lastdrehmomentes einer oben und unten beschriebenen Vorrichtung im Betrieb mit geöffneter Kupplungsvorrichtung, wobei das Drehmoment (a) der an die langsamere der Standgetriebewellen (2) des Umlaufgetriebes gekoppelten Kraftmaschine (A1, A2) auf das negative Lastsollmoment, dividiert durch das Produkt aus Standübersetzung und Standwirkungsgrad in Leistungsflussrichtung geregelt wird, oder (b) der an die Stegwelle (S) des Umlaufgetriebes gekoppelten Kraftmaschine auf das Lastsollmoment, dividiert durch das um 1 verminderte Produkt aus Standübersetzung und Standwirkungsgrad in Leistungsflussrichtung geregelt wird,

sowie bei (a) und (b) die Drehzahl der anderen Antriebsmaschine auf einen bestimmten Wert geregelt wird.

Gegenstand der Erfindung ist auch ein entsprechendes Verfahren zur Regelung des Lastdrehmomentes einer oben und unten beschriebenen Vorrichtung im Betrieb mit geöffneter Kupplungsvorrichtung, wobei die Drehzahlen beider Kraftmaschinen (A1, A2) in der Weise geregelt werden, dass das Produkt aus der Standübersetzung und der Drehzahl des an die langsamere der Standgetriebewellen (2) des Umlaufgetriebes gekoppelten Antriebs, vermindert um das Produkt aus der um 1 verminderten Standübersetzung und der Drehzahl des anderen Antriebs, der Last-Solldrehzahl entspricht. Dabei kann die Drehzahl beider Kraftmaschinen betragsmäßig jeweils auf die Solldrehzahl des Abtriebs, dividiert durch die verdoppelte und um 1 verminderte Standübersetzung des Umlaufgetriebes geregelt werden.

Die erfindungsgemäßen Triebstrang-Vorrichtungen sind insbesondere für ihren Einsatz in Windenergieanlagen, vorzugsweise Flugwindkraftanlagen, geeignet. Gegenstand der Erfindung ist somit auch eine Flugwindkraftanlage, welche mit Hilfe der erfindungsgemäßen Triebstrangvorrichtung betrieben werden.

Einzelheiten der Erfindung:

Die Glieder eines Umlaufgetriebes werden wie üblich mit 1, 2 und S bezeichnet, wobei S die Stegwelle und 1 und 2 die Standgetriebewellen bezeichnen. Die Standübersetzung $i_{12}$ wird definiert als das Drehzahlverhältnis von Welle 1 zu Welle 2 bei stehendem Steg und bildet ein betriebsunabhängiges Konstruktionsmerkmal des Getriebes. Die betragsmäßig langsamere der Standgetriebewellen sei im Folgenden als 2 bezeichnet, die schnelle demzufolge als 1, so dass die Standübersetzung hiernach betragsmäßig stets größer als oder gleich 1 ist. Die bekannte Drehzahlgrundgleichung lautet:

$$\omega_1 - \omega_2 i_{12} - \omega_S\left(1 - i_{12}\right) = 0 \qquad\qquad (a)$$

für die Drehzahlen der Getriebeglieder $\omega_1$, $\omega_2$ und $\omega_3$. Die Drehmomente der Glieder eines Umlaufgetriebes teilen sich nach festen, von der Standübersetzung $i_{12}$ und dem Standwirkungsgrad $\eta_{12}$ abhängigen Verhältnissen auf:

$$M_2/M_1 = -i_{12}\eta_{12}^{w1} \text{ und } M_S/M_2 = 1/(i_{12}\eta_{12}^{w1}) - 1 \qquad\qquad (b)$$

Der Exponent w1 ist hierbei definiert als Vorzeichen der eingehenden Leistung an Welle 1:

$$w1 = sgn\left(\left(\omega_1 - \omega_S\right)M_1\right) \qquad\qquad (c)$$

Insgesamt herrscht stets das Momentengleichgewicht

$$M_1 + M_2 + M_S = 0 \qquad\qquad (d)$$

zwischen den auf die Getriebeglieder aufgebrachten Drehmomenten $M_1$, $M_2$ und $M_S$.

Erfindungsgemäß wird einer der Antriebe an die Stegwelle (S), der zweite Antrieb an die betragsmäßig langsamer laufende der Standgetriebewellen (2) und die Last (L) an die schneller laufende der Standgetriebewellen (1) drehfest gekoppelt. Darüber hinaus wird erfindungsgemäß zwischen mindestens einem Paar beliebiger zueinander beweglicher Glieder des Umlaufgetriebes je eine Freilaufkupplung (6) angebracht, die die durch sie gekoppelten Glieder in dem einen relativen Drehsinn zueinander freilässt - im Folgenden Modus E genannt - und den anderen relativen Drehsinn der betroffenen Glieder sperrt - im Folgenden Modus A genannt. Damit sollen jegliche inneren Bewegungen des Umlaufgetriebes in einer Drehrichtung blockiert werden, so dass es sich in dieser Richtung nur noch im Ganzen gegenüber dem Gestell drehen kann. In diesem Modus sind daher auch die Antriebe (AS, A2) auf gleiche Drehzahl zwangsgekoppelt. Die Momente, die nötig sind, um Gleichungen Text intern zu erfüllen, bringt in Modus A mindestens zum Teil die Freilaufkupplung (6) auf die beteiligten Glieder auf.

Ein Freilauf kann sowohl zwischen einem oder mehreren externen Paaren von Getriebegliedern 1 - 2 (dargestellt in Abbildung), 1 - S, S - 2 oder, soweit konstruktiv möglich, auch zwischen einem oder mehreren beliebigen umlaufenden Getriebegliedern, bspw. zwischen einem oder ggf. mehreren Planetenrädern P und dem Steg S (dargestellt in Abbildung) angebracht werden. Bei Anbringung mehrerer Freiläufe ist ihre Dreh-/Sperrichtung so zu wählen, dass sie gemeinsam öffnen und gemeinsam sperren. Durch Anbringung mehrerer Freiläufe kann das zu haltende Moment im Modus A aufgeteilt werden und so möglicherweise Bauraum oder Kosten gespart werden. In vorteilhafter Ausprägung werden die Freiläufe elastisch an die beteiligten Glieder gekoppelt, um zu gewährleisten, dass alle Freiläufe zum Tragen kommen, und nicht aufgrund von Fertigungsungenauigkeiten und unterschiedlichen Steifigkeiten in den Bauteilen einer der Freiläufe früher blockiert und das Blockieren der anderen damit verhindert. Im Folgenden wird der Einfachheit halber weiterhin von einem einzelnen Freilauf gesprochen. Vorzeichenregel: Im Falle des gesperrten Freilaufs (Modus A) und gleichgerichteter Antriebsmomente sei für diese Schrift das Abtriebsmoment positiv gerichtet, folglich die Antriebsmomente negativ.

Die Erfindung beschränkt sich nicht auf Getriebe mit dem kinematischen Freiheitsgrad 2. Getriebe mit höherem Freiheitsgrad können verwendet werden. Die weiteren freien Glieder können z.B. mit anderen Gliedern oder dem Gestell gekoppelt werden, um so ein mehrstufiges Dreiwellengetriebe zu erhalten, oder es können bspw. weitere Antriebe angekuppelt werden, um auch deren Leistungen zur Abtriebsleistung zu summieren.

Im gesperrten Modus A wird die feste Momentenverteilung des Umlaufgetriebes nach Gleichung (b) durch den Freilauf gewährleistet. Von den Antrieben aus betrachtet gilt sie nicht mehr, vielmehr kann das Momentenverhältnis der Antriebe durch eine Momentenregelung oder andere Vorrichtungen oder Maßnahmen frei eingestellt werden. Das Mo-

mentengleichgewicht

$$M_{AS} + M_{A2} + M_L = 0 \qquad\qquad\text{(e)}$$

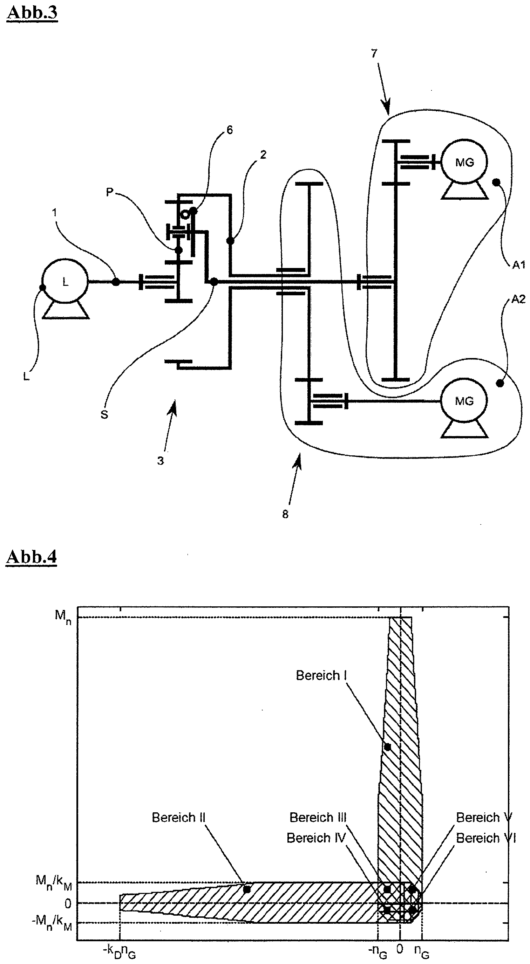

für die Momente der Antriebe $M_{AS}$, $M_{A2}$ und der Last $M_L$ muss jedoch immer noch bestehen. In Modus A ist der Bereich I, III, IV, V und VI nach Abbildung 4 erreichbar.

Da sich beide Antriebswellen in Modus A gleichsinnig drehen, besteht eine vorteilhafte Betriebsart darin, gleichgerichtete Momente auf die Antriebswellen aufzubringen. Dann sind ihre Wellenleistungen ebenfalls gleichgerichtet und an der Abtriebswelle ist die Summe der Antriebsleistungen und die Summe der Antriebsmomente bei Drehzahl der Antriebswellen abrufbar. Anderenfalls würde ein Teil der Antriebsleistung eines der Antriebe durch den anderen Antrieb wieder abgeführt werden und stünde am Abtrieb nicht zur Verfügung. Dieser unerwünschte Teilbetriebsbereich von Modus A wird im Folgenden Modus A* genannt. Der Wirkungsgrad des Umlaufgetriebes im gesperrten Modus A beträgt 1. Erfüllt das Momentenverhältnis der Antriebe Gleichung (b), ist der Freilauf momentenfrei. Das System befindet sich bei immer noch gleicher Drehzahl der Antriebswellen genau am Übergang zwischen Modus A und Modus E.

Im freilaufenden Modus E teilen sich die Momente unter den Antrieben fest nach Gleichung (b) auf. In Modus E ist der Bereich II, III, IV, V und VI nach Abbildung erreichbar.

Da die Antriebe an Welle S und 2 angebracht sind, sind ihre Momente i.d.R. (wenn gilt $|i_{12}^{} \eta_{12}^{w1}| > 1$) entgegengesetzt gerichtet. In vorteilhafter Betriebsart werden ihnen daher entgegen gerichtete Drehsinne verliehen. Dann sind ihre Wellenleistungen wieder gleichgerichtet und an der Abtriebswelle ist die Summe der Antriebsleistungen bei hoher Drehzahl abrufbar. Anderenfalls wird ein Teil der Antriebsleistung eines der Antriebe durch den anderen Antrieb wieder abgeführt und steht am Abtrieb nicht zur Verfügung. Dieser unerwünschte Teilbetriebsbereich von Modus E wird im Folgenden Modus E* genannt. Der Wirkungsgrad des Umlaufgetriebes im freilaufenden Modus E liegt bei betragsmäßig gleich großer Drehzahl der Antriebswellen bei Getrieben mit positiver Standübersetzung (Plusgetrieben) ein wenig unter dem Standwirkungsgrad $\eta_{12}$, bei negativer Standübersetzung (Minusgetrieben) ein wenig darüber.

Durch die Erfindung addieren sich in Modus A die Momente der Drehmoment-Drehzahl-Kennlinien der Antriebe zur Kennlinie am Abtrieb im Bereich von der größeren der beiden negativen bis zur kleineren der beiden positiven Maximaldrehzahlen der Antriebe.

In Modus E ist die Kennlinie im negativen Drehzahlbereich durch die Drehzahl $\omega_1$ nach Gleichung (a) mit $\omega_2$ = max. pos. Drehzahl Antrieb A2 und $\omega_S$ = max. neg. Drehzahl Antrieb AS, sowie im positiven Drehzahlbereich durch die kleinere der beiden positiven Maximaldrehzahlen der Antriebe begrenzt. Die Momente sind positiv wie negativ begrenzt auf den Wert

$$M = min\left( \left| \frac{M_{2\,max}}{-\,i_{12}\,\eta_{12}^{w1}} \right| ; \left| \frac{M_{Smax}}{i_{12}\,\eta_{12}^{w1} - 1} \right| \right) \qquad\qquad\text{(f)}$$

wobei $M_{2max}$ und $M_{Smax}$ die bei momentaner Drehzahl jeweils für die Dauer dieses Zustandes möglichen Maximalmomente der Antriebe an Glied 2 und Glied S bezeichnen. Die Betriebsbereiche der beiden Modi überschneiden sich.

Die Drehzahlspreizung $k_D$, definiert als das Verhältnis zwischen der Abtriebsdrehzahl $\omega_{L2}$ bei gegensinnig mit $+\omega$ und $-\omega$ drehenden Antrieben (Modus E) und der Abtriebsdrehzahl $\omega_{L1}$ bei gleichsinnig mit $\omega$ drehenden Antrieben (Modus A), beträgt

$$k_D = \left| \frac{\omega_{L2}}{\omega_{L1}} \right| = |2\,i_{12} - 1| \qquad\qquad\text{(g)}$$

Die Momentenspreizung $k_M$, definiert als das Verhältnis zwischen dem Abtriebsmoment $M_{L2}$ bei gegensinnigen Antriebsmomenten $+M$ und $-M$ (Modus E) und dem Abtriebsmoment $M_{L1}$ bei gleichsinnigen Antriebsmomenten der Größe jeweils M (Modus A), beträgt

$$k_M = \left| \frac{M_{L1}}{M_{L2}} \right| = |2\,i_{12} - 2| \qquad\qquad\text{(h)}$$

Für Minusgetriebe gilt $k_M = k_D + 1$, für Plusgetriebe $k_M = k_D - 1$.

Die Verhältnisse $k_D$ und $k_M$ sind unter theoretischen Bedingungen ermittelt.

Das Verhältnis der Abtriebsleistungen $PL_1$ und $PL_2$ unter o.g. Bedingungen beträgt $k_M/k_D$.

In einer energetisch und wirtschaftlich vorteilhaften Ausprägung der Erfindung werden an beiden Antrieben jeweils die Maschine und/oder die Übersetzung eines etwaigen Vorgetriebes so gewählt, dass der Bestpunkt beider Antriebe bei gleicher Drehzahl liegt. Durch diese Maßnahme können im Modus A aufgrund der festen, gleichen Drehzahl, aber der beliebigen Momentenverteilung beide Antriebe gleichzeitig drehzahl- und momentenmäßig im Bestpunkt betrieben werden.

In einer weiteren energetisch und wirtschaftlich vorteilhaften Ausprägung der Erfindung werden an beiden Antrieben jeweils die Maschine und/oder die Übersetzung eines etwaigen Vorgetriebes so gewählt, dass das Verhältnis der Momente im Bestpunkt beider Antriebe

$$\left|\frac{M_S}{M_2}\right| = \left|\frac{1}{i_{12}\eta_{12}^{w1}} - 1\right| \tag{i}$$

beträgt. Durch diese Maßnahme können im Modus E aufgrund der festen, ungleichen Momentenverteilung nach Gleichung (b), aber des beliebigen Drehzahlverhältnisses beide Maschinen gleichzeitig drehzahl- und momentenmäßig im Bestpunkt betrieben werden.

Von besonderem Vorteil ist es energetisch und wirtschaftlich, beide Bedingungen zu erfüllen, also Antriebe mit gleicher Bestpunktdrehzahl und einem Verhältnis der Momente im Bestpunkt nach Gleichung Text zu installieren. Auf diese Weise können in beiden Modi A und E die Antriebe gleichzeitig sowohl drehzahlmäßig, als auch momentenmäßig im Bestpunkt betrieben werden.

In anderen Fällen kann es wiederum sicherheitstechnisch oder wirtschaftlich vorteilhaft sein, 2 gleiche Antriebe zu installieren. Im Modus A können dann weiterhin beide Maschinen sowohl gleichzeitig drehzahl- und momentenmäßig in ihrem Bestpunkt betrieben werden, während im Modus E sie drehzahlmäßig beide gleichzeitig im Bestpunkt betrieben werden können, momentenmäßig aber eine der Maschinen um den Faktor nach Gleichung Text von der anderen Maschine abweichen muss, also mindestens eine der Maschinen nicht gleichzeitig mit der anderen in ihrem Momentenbestpunkt arbeiten kann. Dies kann im Modus E geringfügige Verluste im Wirkungsgrad bedeuten. Dafür ist bei Ausfall egal welcher der beiden Maschinen noch die halbe Antriebsleistung vorhanden. Darüber hinaus ist der Beschaffungs- und Integrationsaufwand für 2 gleiche Antriebssysteme geringer.

Beim Einsatz mehrerer Freiläufe muss sichergestellt werden, dass sie gleichzeitig sperren, damit sich das Sperrmoment auf die Freiläufe möglichst gleichmäßig aufteilt. Dies ist aufgrund verschieden großer Spiele und Steifigkeiten in den beteiligten Bauelementen nicht immer gegeben. Vielmehr kann es passieren, dass ein Freilauf sperrt und das volle Moment trägt, während der oder die anderen noch unbelastet sind. Um dem zu begegnen wird in einer vorteilhaften Ausprägung vorgeschlagen, bei Verwendung mehrerer Freiläufe zwischen jedem Freilauf und je mindestens einem Anschlussbauteil je eine drehelastische Kupplung vorzusehen. Diese sorgt für eine bessere Verteilung des Sperrmomentes auf die Freiläufe, sowie auch für eine gewisse Stoßdämpfung beim Sperrvorgang. Aus der zweitgenannten Wirkung kann sich auch ein Vorteil einer drehelastischen Kupplung bei Einsatz nur eines Freilaufs ergeben.

Die Erfindung kann bspw. mittels eines einstufigen Planetengetriebes, Nennübersetzung i=7, ausgeführt werden. Dieses hat eine Standübersetzung von $i_{12}$=-6, daher ist eine Drehzahlspreizung nach Gleichung (g) von $k_D$=13 erreichbar. Es wird als beispielhafte Ausführung vorgeschlagen, wei gleiche Elektromotoren MG mit geregelten Frequenzumrichtern, sogenannte Servomotoren, über wei gleiche Stirnradstufen (7, 8) an das Hohlrad 2 und den Steg S, sowie die Last (L), bspw. eine Seiltrommel, an die Sonne 1 zu koppeln. Das Planetengetriebe wird drehbar zum Gestell gelagert. Je ein Freilauf (6) wird zwischen Steg S und Planetenrädern P angebracht, und zwar derart, dass er bei positiver Leistung der Last (bspw. unter Kraft von der Seiltrommel abgewickeltes Seil) und negativer Leistung beider Antriebe (generatorischer Betrieb) sperrt. In dieser Anordnung sind beide Antriebe kinematisch gleichwertig an das Umlaufgetriebe gekoppelt. Ihre Achsen liegen parallel und im jeweils gleichen Abstand zur ebenfalls parallelen Achse der Last. Eine solche Anordnung kann gut in eine Seiltrommel integriert werden.

In einer anderen Ausprägung wird nur eine der beiden Antriebsmaschinen achsversetzt zum Umlaufgetriebe angebracht, die zweite wird koaxial angebracht.

In einer weiteren Ausprägung können beide Maschinen koaxial zum Planetengetriebe angebracht werden, in dem mindestens eine der beiden Maschinen eine Hohlwelle hat, durch die hindurch eine Welle zur hinteren Antriebsmaschine geführt wird.

Eine Drehzahlübersetzung zwischen Elektromotor und Eingang ins Planetengetriebe kann in allen Fällen vorgesehen werden.

In allen genannten Ausprägungen kann die Seiltrommel entweder ebenfalls koaxial oder durch ein Stirnrad- oder Zugmittelgetriebe achsversetzt zum Planetengetriebe angebracht werden. Eine Drehzahlübersetzung zwischen Sonne des Planetengetriebes und Seiltrommel kann in beiden Fällen vorgesehen werden.

Um alternativ die Momente oder die Drehzahl des Abtriebs regeln zu können, werden folgende Verfahren vorgeschlagen. Einer der Antriebe wird im Folgenden als Master-, der andere als Slave bezeichnet.

Modus A: Befindet sich das System im Modus A (der Freilauf ist gesperrt) und sollen die Lastmomente geregelt werden, so werden erfindungsgemäß die Drehmomente beider Antriebe geregelt. Dies kann der Einfachheit halber auf jeweils das halbe negative Sollmoment $M_{1soll}$ des Abtriebs erfolgen. Aber auch jedes andere Momentenverhältnis zwischen den beiden Antrieben innerhalb deren Kennlinien ist möglich. Soll in Modus A die Last drehzahlgeregelt werden, wird der Masterantrieb drehzahl-, der Slave-Antrieb momentengeregelt. In beiden Fällen erhält in vorteilhafter Ausprägung der Slave-Antrieb als Sollwert zu jedem Zeitpunkt den momentanen Momentsollwert $M_M$ des Masterantriebs, multipliziert mit dem Verhältnis $k_{2S}$. Ein geeigneter Wert für $k_{2S}$ ist das Verhältnis der Momentenfähigkeit, bspw. der Nennmomente, von Slave-Antrieb zu Masterantrieb. Bei gleichen Antrieben beträgt $k_{2S}=0,5$. Falls im Masterantrieb eine Drehzahl- oder Drehzahlbegrenzungsregelung vorhanden ist, ist für $M_M$ der Wert zu verwenden, der aus dieser als Führungsgröße für die Momentenregelung ausgegeben wird. Auf diese Weise teilen sich die Lastmomente sowohl im Momentenregelbetrieb, als auch bei einer eventuell greifenden Drehzahlregelung des Masterantriebs gemäß der Belastbarkeit der Antriebe auf. Gegenüber einer rein lastabhängigen Momentenvorgabe (feste Verteilung des Lastmoments) für jeden der beiden Antriebe besteht so der Vorteil, dass, wenn eine etwaige Drehzahlregelung des Masterantriebs greift, das Moment des Slave-Antriebs mit geregelt wird und dieser so zum Einhalten der Solldrehzahl beitragen kann. Der Slave-Antrieb sollte zu diesem Zweck eine gleich große oder größere erlaubte Maximaldrehzahl haben als die maximale geregelte Drehzahl des Masterantriebs. Eine etwaige eigene Drehzahlbegrenzungsregelung des Slave-Antriebs wird auf einen Maximalwert höher als den des Masterantriebs eingestellt. Vorgeschlagen wird eine Grenze derart höher, dass die Drehzahlbegrenzungsregelung des Slave-Antriebs nur bei Nichtfunktionieren der Drehzahlbegrenzungsregelung des Masterantriebs oder der mechanischen Kopplung der Antriebe greift.

Modus E: Befindet sich das System im Modus E (der Freilauf ist offen), und sollen die Lastmomente geregelt werden, so bildet erfindungsgemäß entweder der Antrieb A2 den Masterantrieb und wird auf den Wert

$$M_2 = \frac{M_{1soll}}{-i_{12}\eta_{12}^{w1}} \tag{j}$$

geregelt, oder der Antrieb AS bildet den Masterantrieb und wird auf den Wert

$$M_S = \frac{M_{1soll}}{i_{12}\eta_{12}^{w1} - 1} \tag{k}$$

geregelt. Der jeweils andere Antrieb bildet den Slave-Antrieb und wird drehzahlgeregelt.

In beiden Fällen wird vorgeschlagen, die Drehzahl des Slave-Antriebs auf den Wert zu regeln, der die geringste Gesamtverlustleistung beider Antriebe erzeugt. Bei Antrieben mit gleichem Verlauf der Verlustleistung in Abhängigkeit von der Drehzahl ist das die negative Drehzahl des Masterantriebs, so dass beide betragsmäßig gleich schnell drehen.

Soll in Modus E die Lastdrehzahl geregelt werden, so wird erfindungsgemäß vorgeschlagen, statt o.g. Momentenregelung im Masterantrieb die Drehzahlen beider Antriebe zu regeln. Dabei muss gelten:

$$\omega_2 i_{12} + \omega_S (1 - i_{12}) = \omega_{1soll} \tag{l}$$

Vorteilhaft ist es, die Drehzahlen der Antriebe so zu wählen, dass die Gesamtverlustleistung beider Antriebe minimal wird. Bei Antrieben mit gleichem Verlauf der Verlustleistung in Abhängigkeit von der Drehzahl ist das jeweils der Betrag

$$|\omega_{soll}| = \frac{\omega_{1soll}}{2i_{12} - 1} \tag{m}$$

für jeden Antrieb. Der Drehsinn ist für Antrieb A2 positiv und für Antrieb AS negativ zu wählen.

Übergang: Im Arbeitsbereich betragsmäßiger Lastdrehzahlen zwischen 0 und der betragsmäßig kleineren der Grenzdrehzahlen der Antriebe und einem Lastmoment oberhalb 0 und unterhalb des Wertes nach Gleichung (f) kann das System sowohl in Modus A, als auch in Modus E betrieben werden. Ein Übergang zwischen den Modi A und E ist in diesem Teilbereich III des Kennfeldes (Abbildung 4) möglich. Der Bereich III teilt sich weiterhin auf in Bereiche, in denen der quasi-statische Betrieb mit gesperrtem Freilauf energetisch günstiger ist und einen Bereich, in dem der Betrieb mit offenem Freilauf energetisch günstiger ist. Die Grenzfunktion zwischen diesen Teilbereichen lässt sich aus dem Gleichsetzen der Funktionsgleichung für die Summe der Verlustleistungen beider Antriebe in Modus A mit der in Modus E ermitteln. Unter der Annahme, dass der Exponent der Potenz des Lastmomentes, von dem der momentenabhängige Anteil der Gesamtverlustleistung der Antriebe linear abhängt, gleich ist dem Exponenten der Potenz der Antriebsdrehzahl, von der der drehzahlabhängige Anteil der Gesamtverlustleistung der Antriebe linear abhängt, ergibt sich eine Gerade. So kann bspw. bei elektrischen Maschinen vereinfacht davon ausgegangen werden, dass ein Teil der Verlustleistungen ausschließlich quadratisch vom Moment abhängt, sowie ein anderer Teil der Verlustleistungen ausschließlich quadratisch von der Drehzahl abhängt.

In diesem Fall ergibt sich die Funktion gleicher Verlustleistungen in den Modi A und E zu

$$\left|\frac{M_1}{\omega_1}\right| = \sqrt{\frac{C_\omega\left(\frac{1}{\left(2\,i_{12}-1\right)^2}-1\right)}{C_M\left(i_{12}\,\eta_{12}^{w1}\left(i_{12}\,\eta_{12}^{w1}-1\right)-k_{2S}^2+k_{2S}\right)}} \qquad\text{(f)}$$

mit dem Proportionalitätsfaktor $C_M$ zwischen Quadrat des Drehmomentes und Verlustleistung und dem Proportionalitätsfaktor $C_\omega$ zwischen Quadrat der Drehzahl und Verlustleistung.

Erfindungsgemäß wird vorgeschlagen, das Umschalten zwischen den Modi am Durchgang des momentanen Arbeitspunktes durch diese Funktion zu vollführen.

Sollen drastische Drehzahl- und Momentensprünge am Übergangspunkt verhindert werden, wird vorgeschlagen, die Übergänge mit einem rampenförmigen Verlauf zu gestalten. Bspw. kann der Übergang von Modus A auf Modus E aus 2 Phasen bestehen: In der ersten Phase wird der Freilauf in beliebigem Verlauf bis zum Übergangspunkt entlastet. Am Übergangspunkt wird der betreffende Antrieb beschleunigungsfrei und momentensprungfrei von Momenten- auf Drehzahlregelung umgeschaltet. In der zweiten Phase werden die Antriebe in beliebigem Verlauf auf die beschriebenen Drehzahlwerte gefahren. Die Steilheit der Verläufe kann vorgegeben werden durch maximal erlaubbare Winkelbeschleunigung oder maximal zu erlaubende Momentengradienten in den Antriebssträngen.

Die höheren Verlustleistungen während der Umschaltphase können, wenn im Bereich AE geblieben wird, aufgerechnet werden gegen die Einsparungen, die sich aufgrund des Wechsels in den günstigeren Modus ergeben. Möglicherweise lohnt ein Moduswechsel nicht, wenn die Verweildauer im günstigeren anderen Modus voraussichtlich nur kurz ist.

Ebenso kann der erhöhte Beschleunigungsaufwand der Antriebe, der aufgrund eines vom Nulldurchgang der Drehzahl weiter entfernten Wechsels in den anderen Modus entstehen kann, verwendet werden, um den Umschaltzeitpunkt weiter zu optimieren. Hier sind bei herkömmlichen Antrieben mit hoher Beschleunigungsfähigkeit jedoch nur verschwindend geringe Einsparungen zu erwarten.

Mit der Erfindung wird erreicht, dass die Antriebe des Triebstrangs in mindestens zwei Betriebspunkten bei optimalem Wirkungsgrad arbeiten können. Die Seilsteuerbarkeit ist im gesamten Drehzahlbereich zwischen den Betriebspunkten gewährleistet. Aufgrund der Leistungssummierung muss die gesamte installierte Nennleistung aller Antriebe nur so groß sein wie der maximale Leistungsbedarf in den Betriebspunkten (z.B. Einfahren oder Ausfahren).

*Abbildungen*

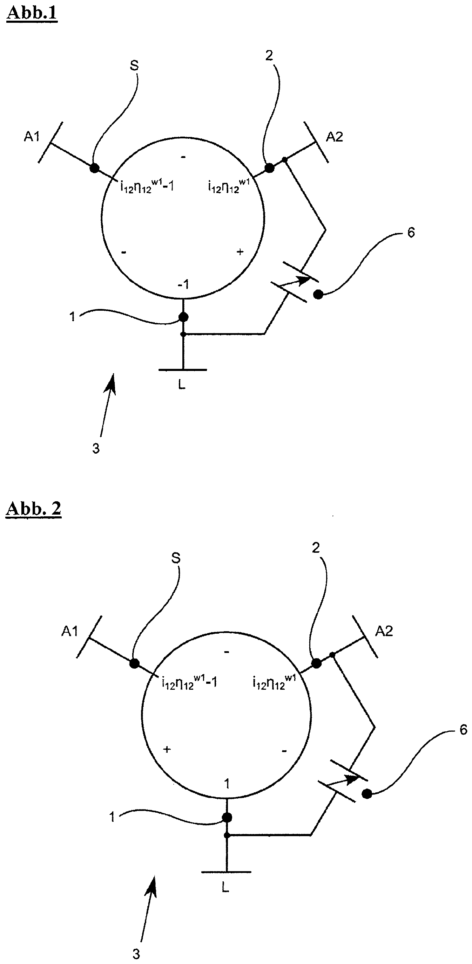

Abb. 1 zeigt ein Wolfsches Schema der Erfindung mit einem Minusgetriebe, die Summenwelle ist die Stegwelle S

Abb. 2 zeigt ein Wolfsches Schema der Erfindung mit einem Plusgetriebe, die Summenwelle ist die Standgetriebewelle 2.

Abb. 3 zeigt ein Ausführungsbeispiel mit 2 Kraftmaschinen MG, über 2 gleiche Stirnradstufen (7, 8) an ein Planetengetriebe (3) gekoppelt

Abb. 4 zeigt die Kennlinie des erfindungsgemäßen Antriebsstrangs in 4 Quadranten beispielhaft für 2 Synchronservoantriebe und Minusgetriebe.

Abb. 5 zeigt den Einsatz der erfindungsgemäßen Triebstrangvorrichtung in einer Flugwindkraftanlage mit ausfahrbarem und einholbarem Windsegel.

**Patentansprüche**

1. Vorrichtung zur Erreichung einer hohen Drehzahlspreizung bei hohem Wirkungsgrad in einem Triebstrang einer angetriebenen Maschine oder Anlage, umfassend

(i) zwei mittels Motor oder Generator arbeitende Kraftmaschinen (A1, A2), welche mittelbar über geeignete Kopplungselemente, Übertragungsglieder und/oder Übersetzungseinrichtungen (7, 8) oder unmittelbar mit einer Stegwelle (S) und einer langsameren von zwei Standgetriebewellen (2) eines Umlaufgetriebes (3) drehfest miteinander verbunden sind, wobei eine der Kraftmaschinen an die Stegwelle (S), und die andere Kraftmaschine an die betragsmäßig langsamer laufende der Standgetriebewellen (2) gekoppelt ist;
(ii) eine Arbeitsmaschine (L), welche mittelbar über Kopplungselemente, Übertragungsglieder und/oder Übersetzungseinrichtungen oder unmittelbar mit der schnelleren von zwei Standgetriebewellen (1) des Umlaufgetriebes (3) drehfest miteinander verbunden ist, und
(iii) die inneren Bewegungen des Umlaufgetriebes (3) durch eine oder mehrere Kupplungsvorrichtung/-en (6) in einer Drehrichtung gesperrt und in der anderen Drehrichtung zugelassen sind,
wobei

(a) eine oder mehrere der Kupplungsvorrichtungen (6, 7, 8) drehelastisch mit einem oder mehreren der beteiligten Übertragungsglieder verbunden ist, oder
(b) die Drehzahlen der wirkungsgradmäßigen Bestpunkte der installierten Kraftmaschinen im Wesentlich gleich sind oder maximal 10% voneinander abweichen, oder
(c) sich die Drehmomente der wirkungsgradmäßigen Bestpunkte der installierten Kraftmaschinen zueinander betragsmäßig im Wesentlichen wie der Betrag des um 1 verminderten Reziproken des Produktes aus Standübersetzung und Standwirkungsgrad in Leistungsflussrichtung des verwendeten Umlaufgetriebes verhalten, oder maximal nicht mehr als 10% von diesem Verhältnis abweichen.

2. Vorrichtung nach Anspruch 1, **dadurch gekennzeichnet, dass** das Umlaufgetriebe (3) durch ein einstufiges oder mehrstufiges Planetengetriebe gebildet wird.

3. Vorrichtung nach Anspruch 1 oder 2, **dadurch gekennzeichnet, dass** die mindestens eine Kupplungsvorrichtung (6)

(i) zwischen die beiden Standgetriebewellen (1, 2) des Umlaufgetriebes geschaltet wird, oder
(ii) zwischen die Stegwelle (S) und die langsamere Standgetriebewelle (2) des Umlaufgetriebes geschaltet wird, oder
(iii) zwischen die Stegwelle (S) und die schnellere Standgetriebewelle (1) des Umlaufgetriebes geschaltet wird, oder
(iv) zwischen die Stegwelle (S) und eines oder mehrere Planetenräder (P) des Umlaufgetriebes geschaltet wird.

4. Vorrichtung nach einem der Ansprüche 1 - 3, **dadurch gekennzeichnet, dass** mindestens eine der beiden Kraftmaschinen (A1, A2) mit mindestens einer weiteren Kraftmaschine funktionell verbunden ist.

5. Vorrichtung nach einem der Ansprüche 1 - 4, **dadurch gekennzeichnet, dass** die Arbeitsmaschine (L) mit mindestens einer weiteren Arbeitsmaschine funktionell verbunden ist.

6. Verfahren zur Regelung des Lastdrehmomentes einer Vorrichtung gemäß einem der der Ansprüche 1 - 5 im Betrieb mit gesperrter Kupplungsvorrichtung, **dadurch gekennzeichnet, dass** die Drehzahlen von beiden Kraftmaschinen (A1, A2) geregelt werden, wobei eine Kraftmaschine als Master-Device und die andere Kraftmaschine, als Slave-Device betrieben wird.

7. Verfahren nach Anspruch 6, **dadurch gekennzeichnet, dass** das Solldrehmoment des Drehmomentregelkreises der als Slave-Device betriebenen Kraftmaschine zum Solldrehmoment des ggf. in einen Drehzahlregelkreis eingebetteten Drehmomentregelkreises der als Master-Device betriebenen Kraftmaschine in ein festes Verhältnis gesetzt wird.

8. Verfahren nach Anspruch 7, **dadurch gekennzeichnet, dass** das Verhältnis der Solldrehmomente dem der Momentenfähigkeit oder des Nennmoments der Kraftmaschinen entspricht.

9. Verfahren zur Regelung des Lastdrehmomentes einer Vorrichtung gemäß einem der Ansprüche 1 - 5 im Betrieb mit geöffneter Kupplungsvorrichtung, **dadurch gekennzeichnet, dass** das Drehmoment

(a) der an die langsamere der Standgetriebewellen (2) des Umlaufgetriebes gekoppelten Kraftmaschine (A1, A2) auf das negative Lastsollmoment, dividiert durch das Produkt aus Standübersetzung und Standwirkungsgrad in Leistungsflussrichtung geregelt wird, oder

(b) der an die Stegwelle (S) des Umlaufgetriebes gekoppelten Kraftmaschine auf das Lastsollmoment, dividiert durch das um 1 verminderte Produkt aus Standübersetzung und Standwirkungsgrad in Leistungsflussrichtung geregelt wird, sowie jeweils die Drehzahl der anderen Antriebsmaschine auf einen bestimmten Wert geregelt wird.

10. Verfahren zur Regelung der Lastdrehzahl einer Vorrichtung gemäß einem der Ansprüche 1 - 5 im Betrieb mit geöffneter Kupplungsvorrichtung, **dadurch gekennzeichnet, dass** die Drehzahlen beider Kraftmaschinen (A1, A2) in der Weise geregelt werden, dass das Produkt aus der Standübersetzung und der Drehzahl des an die langsamere der Standgetriebewellen (2) des Umlaufgetriebes gekoppelten Antriebs, vermindert um das Produkt aus der um 1 verminderten Standübersetzung und der Drehzahl des anderen Antriebs, der Last-Solldrehzahl entspricht.

11. Flugwindkraftanlage, enthaltend eine Triebstrang-Vorrichtung gemäß einem der Ansprüche 1 - 5.

12. Flugwindkraftanlage mit ausfahrbarem und einholbarem Windsegel und einer Triebstrangvorrichtung, umfassend :

(i) zwei mittels Motor oder Generator arbeitende Kraftmaschinen (A1, A2), welche mittelbar über geeignete Kopplungselemente, Übertragungsglieder und/oder Übersetzungseinrichtungen (7, 8) oder unmittelbar mit einer Stegwelle (S) und einer langsameren von zwei Standgetriebewellen (2) eines Umlaufgetriebes (3) drehfest miteinander verbunden sind, wobei eine der Kraftmaschinen an die Stegwelle (S), und die andere Kraftmaschine an die betragsmäßig langsamer laufende der Standgetriebewellen (2) gekoppelt ist;
(ii) eine Arbeitsmaschine (L), welche mittelbar über Kopplungselemente, Übertragungsglieder und/oder Übersetzungseinrichtungen oder unmittelbar mit der schnelleren von zwei Standgetriebewellen (1) des Umlaufgetriebes (3) drehfest miteinander verbunden ist, und
(iii) die inneren Bewegungen des Umlaufgetriebes (3) durch eine oder mehrere Kupplungsvorrichtung/-en (6) in einer Drehrichtung gesperrt und in der anderen Drehrichtung zugelassen sind,
wobei die Kupplungsvorrichtung (6) durch eine Freilaufkupplung gebildet wird.

13. Flugwindkraftanlage nach Anspruch 12, **dadurch gekennzeichnet, dass** das Umlaufgetriebe (3) ein einstufiges oder mehrstufiges Planetengetriebe ist.

**Claims**

1. Device for achieving a high spread of speeds with high efficiency in a drive train of a driven machine or installation, comprising

(i) two power machines (A1, A2), working by means of motor or generator, which are connected in a rotationally fixed manner, either indirectly via suitable coupling elements, transmission members and/or translation devices (7, 8) or directly, to a carrier shaft (S) and a slower of two stationary-gear shafts (2) of an epicyclic gear train (3), where one of the power machines is coupled to the carrier shaft (S), and the other power machine is coupled to the stationary-gear shaft (2) that is running more slowly in terms of absolute value;
(ii) a work machine (L), which is connected in a rotationally fixed manner, either indirectly via coupling elements, transmission members and/or translation devices or directly, to the faster of two stationary-gear shafts (2) of the epicyclic gear train (3), and
(iii) the internal movements of the epicyclic gear train (3) are blocked in one direction of rotation and allowed in the other direction of rotation,
where

(a) one or more of the coupling devices (6, 7, 8) is connected in a rotationally elastic manner to one or more of the transmission members involved, or

(b) the speeds at the optimum points of the installed power machines with respect to efficiency are essentially the same or differ from one another by a maximum of 10%, or

(c) the torques at the optimum points of the installed power machines with respect to efficiency are essentially equal to the absolute value of the reciprocal, reduced by 1, of the product of stationary translation and stationary efficiency in the power flow direction of the epicyclic gear train used, or differs from this ratio by a maximum of not more than 10%.

2.  Device according to Claim 1, **characterised in that** the epicyclic gear train (3) is formed by a single-stage or multistage planetary gear train .

3.  Device according to Claim 1 or 2, **characterised in that** at least one coupling device (6)

    (i) is connected between the two stationary-gear shafts (1, 2) of the epicyclic gear train, or
    (ii) is connected between the carrier shaft (S) and the slower stationary-gear shaft (2) of the epicyclic gear train, or
    (iii) is connected between the carrier shaft (S) and the faster stationary-gear shaft (1) of the epicyclic gear train, or
    (iv) is connected between the carrier shaft (S) and one or more planet gears (P) of the epicyclic gear train.

4.  Device according to one of Claims 1 - 3, **characterised in that** at least one of the two power machines (A1, A2) is functionally connected to at least one further power machine.

5.  Device according to one of Claims 1 - 4, **characterised in that** the work machine (L) is functionally connected to at least one further work machine.

6.  Method for regulating the torque under load of a device according to one of Claims 1 - 5 in operation with blocked coupling device, **characterised in that** the speeds of the two power machines (A1, A2) are regulated, where one power machine is operated as master device and the other power machine is operated as slave device.

7.  Method according to Claim 6, **characterised in that** the target torque of the torque control loop of the power machine operated as slave device is set in a fixed ratio to the target torque of the torque control loop, optionally embedded in a speed control loop, of the power machine operated as master device.

8.  Method according to Claim 7, **characterised in that** the ratio of the target torques corresponds to that of the moment capacity or rated moment of the power machines.

9.  Method for regulating the torque under load of a device according to one of Claims 1 - 5 in operation with disengaged coupling device, **characterised in that** the torque

    (a) of the power machine (A1 or A2) that is coupled to the slower of the stationary-gear shafts (2) of the epicyclic gear train (3) is regulated to the negative target moment under load, divided by the product of stationary translation and stationary efficiency in the power flow direction, or
    (b) the power machine that is coupled to the carrier shaft (S) of the epicyclic gear train is regulated to the target moment under load, divided by the product, reduced by 1, of stationary translation and stationary efficiency in the power flow direction, and in each case the speed of the other drive machine is regulated to a specific value.

10. Method for regulating the speed under load of a device according to one of Claims 1 - 5 in operation with disengaged coupling device, **characterised in that** the speeds of the two power machines (A1, A2) are regulated in such a way that the product of the stationary translation and the speed of the drive coupled to the slower of the stationary-gear shafts (2) of the epicyclic gear train, reduced by the product of the stationary translation reduced by 1 and the speed of the other drive, corresponds to the target speed under load.

11. Airborne wind energy system, containing a drive train device according to one of claims 1 -5.

12. Airborne wind energy system with extendable and retractable wind sail and a drive train device, comprising:

    (i) two power machines (A1, A2), working by means of motor or generator, which are connected in a rotationally fixed manner, either indirectly via suitable coupling elements, transmission members and/or translation devices (7, 8) or directly, to a carrier shaft (S) and a slower of two stationary-gear shafts (2) of an epicyclic gear train (3), where one of the power machines is coupled to the carrier shaft (S), and the other power machine is coupled to the stationary-gear shaft (2) that is running more slowly in terms of absolute value;

(ii) a work machine (L), which is connected in a rotationally fixed manner, either indirectly via coupling elements, transmission members and/or translation devices or directly, to the faster of two stationary-gear shafts (2) of the epicyclic gear train (3), and

(iii) the internal movements of the epicyclic gear train (3) are blocked in one direction of rotation and allowed in the other direction of rotation by one or more coupling device(s) (6),

where the coupling device (6) is formed by a freewheel clutch.

13. Airborne wind energy system according to Claim 12, **characterised in that** the epicyclic gear train (3) is a single-stage or multistage planetary gear train.

## Revendications

1. Dispositif pour réaliser une répartition importante de vitesses selon un rendement élevé à l'intérieur d'une chaîne cinématique d'une machine ou d'une installation entraînée, comprenant :

(i) deux machines alimentées en puissance électrique (A1, A2), qui fonctionnent au moyen d'un moteur ou d'un générateur, lesquelles machines sont connectées d'une manière fixe en termes de rotation, soit de façon indirecte via des éléments de couplage appropriés, des éléments de transmission appropriés et/ou des dispositifs de translation appropriés (7, 8), soit de façon directe, à un arbre de support (S) et à un arbre plus lent de deux arbres à engrenage stationnaire (2) d'un train d'engrenages épicycloïdal (3), dans lequel l'une des machines alimentées en puissance électrique est couplée à l'arbre de support (S), et l'autre machine alimentée en puissance électrique est couplée à l'arbre à engrenage stationnaire (2) qui est en train de fonctionner plus lentement en termes de valeur absolue ;

(ii) un engin de chantier (L), lequel est connecté d'une manière fixe en termes de rotation, soit de façon indirecte via des éléments de couplage, des éléments de transmission et/ou des dispositifs de translation, soit de façon directe, au plus rapide des deux arbres à engrenage stationnaire (2) du train d'engrenages épicycloïdal (3) ; et

(iii) les mouvements internes du train d'engrenages épicycloïdal (3) sont bloqués dans un sens de rotation et sont autorisés dans l'autre sens de rotation ; dans lequel :

(a) un ou plusieurs des dispositifs de couplage (6, 7, 8) est/sont connecté(s) d'une manière élastique en termes de rotation à un ou à plusieurs des éléments de transmission qui sont mis en jeu ; ou

(b) les vitesses au niveau des points optimum des machines alimentées en puissance électrique installées par rapport au rendement sont essentiellement les mêmes ou diffèrent l'une de l'autre d'un maximum de 10% ; ou

(c) les couples au niveau des points optimum des machines alimentées en puissance électrique installées par rapport au rendement sont essentiellement égaux à la valeur absolue de l'inverse, réduit de 1, du produit de la translation stationnaire et du rendement stationnaire dans la direction de circulation de puissance du train d'engrenages épicycloïdal qui est utilisé, ou diffèrent de ce rapport d'un maximum non supérieur à 10%.

2. Dispositif selon la revendication 1, **caractérisé en ce que** le train d'engrenages épicycloïdal (3) est formé par un train d'engrenages planétaire à un seul étage ou à multiples étages.

3. Dispositif selon la revendication 1 ou 2, **caractérisé en ce qu'**au moins un dispositif de couplage (6)

(i) est connecté entre les deux arbres à engrenage stationnaire (1, 2) du train d'engrenages épicycloïdal ; ou

(ii) est connecté entre l'arbre de support (S) et l'arbre à engrenage stationnaire plus lent (2) du train d'engrenages épicycloïdal ; ou

(iii) est connecté entre l'arbre de support (S) et l'arbre à engrenage stationnaire plus rapide (1) du train d'engrenages épicycloïdal ; ou

(iv) est connecté entre l'arbre de support (S) et un ou plusieurs engrenage(s) planétaire(s) (P) du train d'engrenages épicycloïdal.

4. Dispositif selon l'une des revendications 1 - 3, **caractérisé en ce qu'**au moins l'une des deux machines alimentées en puissance électrique (A1, A2) est connectée fonctionnellement à au moins une autre machine alimentée en puissance électrique.

**5.** Dispositif selon l'une des revendications 1 - 4, **caractérisé en ce que** l'engin de chantier (L) est connecté fonctionnellement à au moins un autre engin de chantier.

**6.** Procédé pour réguler le couple sous charge d'un dispositif selon l'une des revendications 1 - 5 en fonctionnement avec un dispositif de couplage bloqué, **caractérisé en ce que** les vitesses des deux machines alimentées en puissance électrique (A1, A2) sont régulées, dans lequel une machine alimentée en puissance électrique est mise en fonctionnement en tant que dispositif maître et l'autre machine alimentée en puissance électrique est mise en fonctionnement en tant que dispositif esclave.

**7.** Procédé selon la revendication 6, **caractérisé en ce que** le couple cible de la boucle de commande de couple de la machine alimentée en puissance électrique qui est mise en fonctionnement en tant que dispositif esclave est établi selon un rapport fixe par rapport au couple cible de la boucle de commande de couple, en option sous intégration à l'intérieur d'une boucle de commande de vitesse, de la machine alimentée en puissance électrique qui est mise en fonctionnement en tant que dispositif maître.

**8.** Procédé selon la revendication 7, **caractérisé en ce que** le rapport des couples cible correspond à celui de la capacité en termes de moments ou du moment nominal des machines alimentées en puissance électrique.

**9.** Procédé pour réguler le couple sous charge d'un dispositif selon l'une des revendications 1 - 5 en fonctionnement avec un dispositif de couplage désengagé, **caractérisé en ce que** le couple

(a) de la machine alimentée en puissance électrique (A1 ou A2) qui est couplée au plus lent des arbres à engrenage stationnaire (2) du train d'engrenages épicycloïdal (3) est régulé au moment cible négatif sous charge, divisé par le produit de la translation stationnaire et du rendement stationnaire dans la direction de circulation de puissance ; ou
(b) la machine alimentée en puissance électrique qui est couplée à l'arbre de support (S) du train d'engrenages épicycloïdal est régulée au moment cible sous charge, divisé par le produit, réduit de 1, de la translation stationnaire et du rendement stationnaire dans la direction de circulation de puissance, et dans chaque cas, la vitesse de l'autre machine d'entraînement est régulée à une valeur spécifique.

**10.** Procédé pour réguler la vitesse sous charge d'un dispositif selon l'une des revendications 1 - 5 en fonctionnement avec un dispositif de couplage désengagé, **caractérisé en ce que** les vitesses des deux machines alimentées en puissance électrique (A1, A2) sont régulées de telle sorte que le produit de la translation stationnaire et de la vitesse de la machine d'entraînement qui est couplée au plus lent des arbres à engrenage stationnaire (2) du train d'engrenages épicycloïdal, réduit du produit de la translation stationnaire réduite de 1 et de la vitesse de l'autre machine d'entraînement, corresponde à la vitesse cible sous charge.

**11.** Système aéroporté à énergie éolienne, contenant un dispositif de chaîne cinématique selon l'une des revendications 1 - 5.

**12.** Système aéroporté à énergie éolienne avec une aile d'éolienne pouvant être étendue et rétractée et un dispositif de chaîne cinématique, comprenant :

(i) deux machines alimentées en puissance électrique (A1, A2), qui fonctionnent au moyen d'un moteur ou d'un générateur, lesquelles machines sont connectées d'une manière fixe en termes de rotation, soit de façon indirecte via des éléments de couplage appropriés, des éléments de transmission appropriés et/ou des dispositifs de translation appropriés (7, 8), soit de façon directe, à un arbre de support (S) et à un arbre plus lent de deux arbres à engrenage stationnaire (2) d'un train d'engrenages épicycloïdal (3), dans lequel l'une des machines alimentées en puissance électrique est couplée à l'arbre de support (S), et l'autre machine alimentée en puissance électrique est couplée à l'arbre à engrenage stationnaire (2) qui est en train de fonctionner plus lentement en termes de valeur absolue ;
(ii) un engin de chantier (L), lequel est connecté d'une manière fixe en termes de rotation, soit de façon indirecte via des éléments de couplage, des éléments de transmission et/ou des dispositifs de translation, soit de façon directe, au plus rapide des deux arbres à engrenage stationnaire (2) du train d'engrenages épicycloïdal (3) ; et
(iii) les mouvements internes du train d'engrenages épicycloïdal (3) sont bloqués dans un sens de rotation et sont autorisés dans l'autre sens de rotation par un ou plusieurs dispositif(s) de couplage (6) ;

dans lequel le dispositif de couplage (6) est formé par un embrayage à roue libre.

**13.** Système aéroporté à énergie éolienne selon la revendication 12, **caractérisé en ce que** le train d'engrenages épicycloïdal (3) est un train d'engrenages planétaire à un seul étage ou à multiples étages.

## Abb.1

## Abb. 2

## Abb.3

## Abb.4

Abb.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2006001806
- CA 2730939
- DE 3209368
- DE 4319823
- DE 19629417
- DE 102008047261
- JP 2009120105 B